# EUROPÄISCHE PATENTSCHRIFT

(11) **EP 0 727 647 B1**
(45) Veröffentlichungstag und Bekanntmachung des Hinweises auf die Patenterteilung: **05.04.2000**
(21) Anmeldenummer: 96101545.0
(22) Anmeldetag: 03.02.1996
(51) Int. Cl.: G01D 11/24, G01P 1/02

(54) **Messfühler für Kraftfahrzeuge**
Sensor for use in vehicles
Capteur de mesure pour véhicules à moteur

(30) Priorität: 14.02.1995 DE 19504820
(43) Veröffentlichungstag der Anmeldung: 21.08.1996
(73) Patentinhaber: RICHARD HIRSCHMANN GESELLSCHAFT m.b.H., 6830 Rankweil-Brederis (AT)
(72) Erfinder: Federer, Arnold, A-6840 Götzis (AT); Gächter, Oliver, A-6800 Feldkirch (AT)
(74) Vertreter: Hefel, Herbert, Dipl.-Ing.

(56) Entgegenhaltungen:
- EP-A- 0 282 967
- EP-A- 0 560 381
- WO-A-93/12434
- DE-A- 3 827 937

## Beschreibung

Die Erfindung bezieht sich auf einen Meßfühler für Kraftfahrzeuge mit einem als Hallsensor ausgebildeten Meßwertaufnehmer und einer elektronischen Schaltung, insbesondere einer integrierten Schaltung zur Aufbereitung, Verstärkung und/oder Verarbeitung der Signale des Meßwertaufnehmers.

Die DE-OS 38 09 886 zeigt und beschreibt einen Meßfühler für Kraftfahrzeuge mit elektronischer Regelung des Fahr- und Bremsverhaltens in Abhängigkeit von der Radgeschwindigkeit. Dieser Meßfühler besteht aus einer Kombination und baulichen Vereinigung eines induktiven oder magnetoresistiven Meßwertaufnehmers mit einem Vertikalbeschleunigungs-Sensorsystem und gegebenenfalls mit weiteren Meßfühlern. Über eine gemeinsame Signalleitung werden die Meßsignale herausgeführt. Außer den Meßwertaufnehmern ist noch eine elektronische Schaltung vorgesehen, die zur Aufbereitung, Verstärkung und/oder Verarbeitung der Signale dient. Alle diese Teile und Bauelemente sind in einem gemeinsamen Gehäuse untergebracht, das topfartig ausgebildet ist. Die hier vorgesehenen Meßwertaufnehmer arbeiten auf induktiver oder magnetoresistiver Basis. Zum Teil sind in diesem Meßfühler bewegliche Magnete vorhanden, die in Schwebe gehalten werden, aus welchem Grund ein Meßfühler dieser Art nur in einer vorgegebenen Lage eingebaut werden kann, um die Beweglichkeit der Magnete nicht zu beeinträchtigen. Das Gehäuse ist zur Gänze von den elektrischen Bauteilen ausgefüllt, sofern ein Hohlraum vorhanden ist, ist in diesen ein korrespondierend zur Form des Hohlraumes ausgebildeter Gummiblock eingesetzt.

Auch die DE-36 38 622 C2 zeigt und beschreibt einen Magnetfeldgeber mit einem einen Raum minimaler magnetischer Induktion bildenden Permanentmagnetsystem und einem in dem Raum minimaler magnetischer Induktion angeordneten Hallgenerator. Als Permanentmagnetsystem ist ein Ringmagnet vorgesehen. Der Hallgenerator ist der Öffnung der Ringmagnete so zugeordnet, daß die magnetisch sensitive Achse des Hallgenerators und die Achse des Ringmagneten im wesentlichen zusammenfallen. Der Montageaufwand für einen solchen Magnetfeldgeber ist recht erheblich.

Vor allem aber ist hier der aus der EP 560 381 A1 bekannte Meßfühler zu erwähnen, der ebenfalls mit Hallsensoren arbeitet. Dieser Meßfühler besteht aus einem zylindrischen Gehäuse mit einem topfartigen, das Gehäuse einseitig verschließenden Deckel. In diesem Gehäuse ist ein topfartiger Halter eingesetzt, dessen Höhe nur einen Bruchteil der inneren Höhe des Gehäuses beträgt. Im Boden dieses topfartigen Halters ist eine Öffnung ausgespart, in der die Hallsensoren liegen. Auf der Bodeninnenseite des Halters liegt ein Magnet auf, der das Magnetfeld für den Betrieb der Hallsensoren bereitstellt. Zur Halterung dieses Magneten ist ein Joch angeordnet. Magnet und Joch werden von einem Abstandshalter fixiert, der gegenüber dem ersterwähnten Halter formschlüssig festgelegt ist. Der restliche Innenraum des zylindrischen Gehäuses ist mit einer Kunststoffmasse ausgefüllt, die bündig mit dem Rand des Gehäuses abschließt. Bei der Montage eines solchen Meßfühlers werden zuerst die Sensoren, der Magnet, das Joch und der Abstandshalter im topfartigen Halter festgelegt und auch die elektrischen Anschlüsse hergestellt. Dann wird der Halter in das topfartige Gehäuse eingesetzt und anschließend ausgegossen. Der Halter ist ausschließlich und allein durch die Vergußmasse im Gehäuse festgelegt, und dies wird als nicht zweckmäßig angesehen, da dadurch die Montage erschwert ist, da hier zusätzliche Mittel vorgesehen werden müssen, um den Halter mit den erwähnten Bauelementen im Gehäuse in der für ihn vorgesehenen Lage und Stellung festzuhalten, bevor die Vergußmasse eingebracht werden kann.

Ausgehend von diesem Stand der Technik zielt die Erfindung darauf ab, einen lageunabhängigen Meßfühler zu schaffen, der einen Aufbau besitzt, der herstellungstechnisch gesehen einfach und sicher ist, der dennoch eine hohe Effizienz aufweist und bei dem vor allem die im Meßfühler bei der Herstellung vormontierten Teile ihre vorgesehene Lage konstruktionsbedingt beibehalten, wenn der Meßfühler fertiggestellt wird, was den Montageaufwand gering hält und daher eine rasche Montage sicherstellt, was für einen Massenartikel außerordentlich wichtig ist, schlägt sich doch die für die Herstellung eines solchen Bauteiles aufgewandte Zeit nicht unerheblich in der Preisgestaltung nieder. Zur Lösung dieser komplexen Aufgabe schlägt die Erfindung jene Maßnahmen vor, die Inhalt und Gegenstand des Patentanspruches 1 sind.

Um die Erfindung zu veranschaulichen, werden zwei Ausführungsbeispiele anhand der Zeichnung näher beschrieben. Es zeigen:
Fig. 1 einen Vertikalschnitt durch einen Drehzahlfühler;
Fig. 2 eine Seitensicht;
Fig. 3 eine Draufsicht;
Fig. 4 einen Vertikalschnitt durch das topfartige Gehäuse;
Fig. 5 einen Vertikalschnitt durch den Stützteil;
Fig. 6 einen Vertikalschnitt durch eine zweite Ausführungsform eines Drehzahlfühlers.

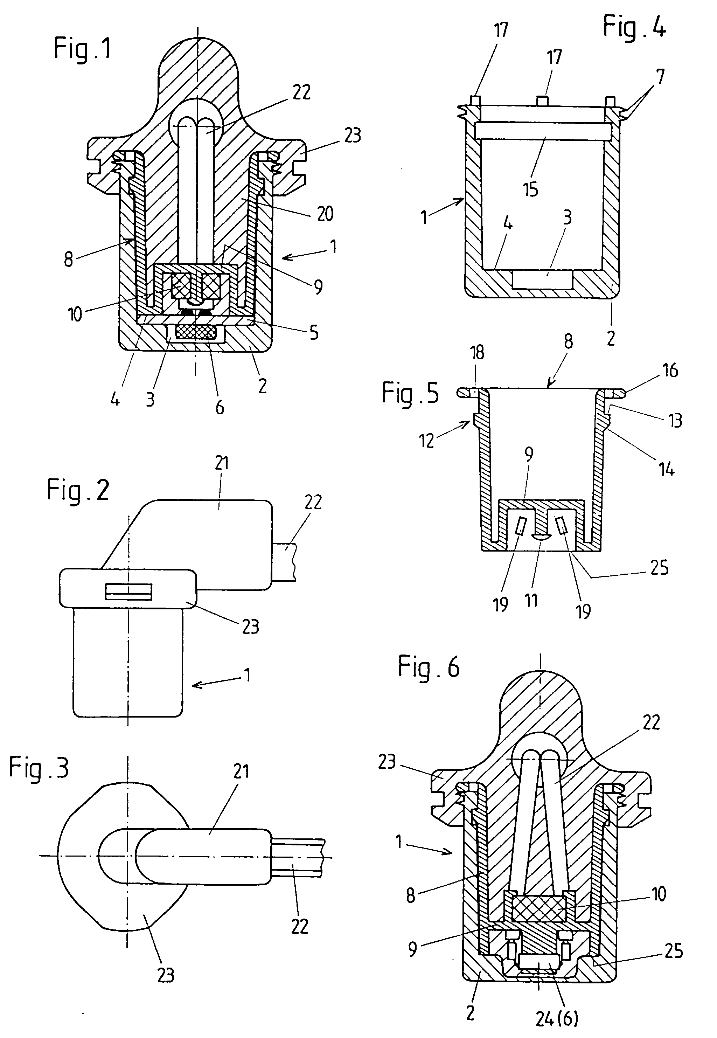

Die Fig. 2 und 3 sind in einem gegenüber den anderen Figuren verkleinerten Maßstab dargestellt.

Der Aufbau des Drehzahlfühlers ist aus dem Vertikalschnitt nach Fig. 1 ersichtlich: Ein topfartiges Gehäuse 1 von zylindrischer Form weist in seinem Boden 2 eine Vertiefung 3 auf. Die Innenseite des Bodens 2 bildet zusammen mit der erwähnten Vertiefung eine Schulter 4, auf welcher der Rand einer Leiterplatte 5 aufliegt, an deren Unterseite ein HallMeßfühler 6 festgelegt ist, der von dieser Vertiefung 3 aufgenommen ist. Auf der Leiterplatte sind elektronische Schaltglieder angeordnet, insbesondere integrierte Schaltkreise, die hier nicht dargestellt sind. Die Außenseite des oberen Randes des topfartigen Gehäuses 1 ist mit zweckmäßigerweise umlaufenden Vorsprüngen 7 bestückt. Nahe des oberen Randes ist eine innenwandseitige Nut 15 ausgespart. Am oberen Rand dieses topfartigen Gehäuses sind mehrere Zapfen 17 angeformt, deren Achsen parallel zur Achse des Gehäuses 1 liegen (Fig. 4).

In dieses topfartige Gehäuse 1 ist ein Stützteil 8 eingesetzt, der hier ebenfalls topfartig ausgebildet ist. Bezogen auf die Abmessungen des topfartigen Gehäuses list dieser Stützteil 8 so dimensioniert, daß sein unterer Rand auf der Leiterplatte 5 aufliegt und diese damit lagemäßig fixiert. Der Boden 9 dieses topfartigen Stützteiles 8 ist gegenüber der Leiterplatte 5 zurückgesetzt, und in dem dadurch gebildeten Hohlraum ist ein Dauermagnet 10 festgelegt, der der magnetischen Vorspannung des HallMeßfühlers 6 dient. Dieser klotz- oder zylinderartige Dauermagnet 10 besitzt eine mittige Bohrung, mit welcher er auf einen als Steckdorn 11 ausgebildeten Halter an der Unterseite des zurückversetzten Bodens 9 aufgesteckt ist. Das freie Ende dieses Steckdornes 11 ist pilzartig erweitert und hintergreift damit den Rand der Bohrung des Dauermagneten formschlüssig.

Die Durchmesser des topfartigen Stützteiles 8 sind so bemessen, daß der in das Gehäuse 1 eingesetzte Stützteil an der Innenwand des Gehäuses anliegt. Nahe seinem oberen Rand besitzt der Stützteil 8 einen außen liegenden Wulst 12, dessen obere ringförmige Begrenzungsfläche 13 etwa rechtwinkelig zur Wandung des Stützteiles 8 liegt, wogegen die untere Begrenzungsfläche 14 als Kegelringfläche ausgebildet ist, deren Öffnungswinkel nach unten, gegen den Boden des Stützteiles 8 gerichtet ist. Des weiteren besitzt der Stützteil 8 an seinem oberen Rand einen radial auskragenden Flansch 16, der am Rand des topfartigen Gehäuses 1 aufliegt. Der Rand des topfartigen Gehäuses 1 weist zur Achse desselben parallel liegende Zapfen 17 auf, die in die im Flansch 16 des Stützteiles 8 vorgesehenen Aussparungen 18 formschlüssig eingreifen. Im zurückversetzten Boden 9 des Stützteiles 8 sind ferner Öffnungen 19 ausgespart.

Der vom Gehäuse 1 und dem Stützteil 8 begrenzte Hohlraum ist mit einer Vergußmasse 20 ausgefüllt. Diese Vergußmasse 20 bildet auch den Kopf des Drehzahlfühlers und zusätzlich eine Tülle 21 für die in den bzw. aus dem Fühler führende Signalleitung 22. Kopf und Tülle sind dabei einstückig ausgebildet. Der aus der Vergußmasse 20 gebildete Kopf des Drehzahlfühlers weist eine gegenüber dessen Gehäuse 1 radial ausladende Schulter 23 auf. Die inneren Enden der Signalleitung 22 sind an entsprechenden Anschlußpunkten an der Leiterplatte 5 angelötet.

Ist vorstehend erwähnt, daß der Drehzahlfühler zylindrisch ausgebildet ist, so liegt es im Rahmen der Erfindung, seinen Querschnitt eckig zu gestalten. Vom Stützteil 8 ist vorstehend ausgesagt, daß er topfartig ausgebildet ist. Auch hier wäre denkbar, diesen Stützteil U-förmig zu gestalten. Aus Fig. 1 ist auch zu erkennen, daß die achsiale Länge des Drehzahlfühlers größer ist als sein Durchmesser. Es liegt im Rahmen der Erfindung, dieses Verhältnis abzuändern. Die achsiale Länge des Drehzahlfühlers ist vor allem durch die Wandstärke jenes Bauteiles vorgegeben, der den Drehzahlfühler aufzunehmen hat.

Für die Montage des vorstehend im einzelnen beschriebenen Drehzahlfühlers sind folgende Schritte vorgesehen: Vorerst werden die mit der Leiterplatte 5 zu verbindenden Enden der Signalleitung 22 durch eine im Bereich des Bodens 9 des Stützteiles 8 vorgesehene Öffnung eingefädelt und mit der Leiterplatte verlötet. Der Dauermagnet 10 wird auf den Steckdorn aufgesteckt. Es ist möglich, im Rahmen der Montage vorerst einen nicht magnetisierten Ferritkern einzusetzen und diesen erst bei der Endmontage zu magnetisieren, was die Montagevorgänge erleichtert. Nun werden Leiterplatte 5 und Stützteil 8 zusammen mit dem Dauermagnet 10 in das Gehäuse 1 eingesetzt. Dabei wird der Stützteil durch die kegelringförmige Begrenzungsfläche 14 etwas zusammengedrückt und anschließend rastet der Wulst 12 in die Nut 15 des Gehäuses 1 ein. Die Zapfen 17 in Verbindung mit den Aussparungen 18 im Flansch 16 des Stützteiles 8 können sowohl der Positionierung der zusammenzufügenden Teile dienen wie auch verhindern, daß nachfolgend, wenn die so zusammengefügten Teile in eine Vergußform eingebracht werden und die Vergußmasse eingespritzt wird, die in die Vergußform einströmende Vergußmasse den oberen Rand des Stützteiles 8 abhebt und radial nach innen drückt. Durch die Öffnungen 19 im zurückversetzten Boden 9 des Stützteiles 8 dringt auch Vergußmasse in den unteren Hohlraum, in dem der Dauermagnet 10 vorgesehen ist und in dem auch elektronische Bauteile liegen. Durch die Form und Größe dieser Öffnungen 19 kann das Eindringen der Vergußmasse gesteuert werden. Die Vorsprünge 7 am oberen Rand des Gehäuses 1 können zur sicheren Halterung der aus der Vergußmasse 20 gebildeten Schulter 23 dienen und diese Schulter 23 dient unter anderem als Anschlag dafür, wenn der aus den Fig. 1 bis 3 ersichtliche Drehzahlfühler in eine in einem Maschinenbauteil ausgesparte Öffnung einzusetzen ist. Das Material, aus dem das Gehäuse 1 und die angeformten Vorsprünge 7 gefertigt sind, kann so beschaffen sein, daß beim nachträglichen Umspritzen durch die Temperatur der Vergußmasse oder Spritzgußmasse diese Vorsprünge 7 angeschmolzen werden und somit eine dichte Verbindung zwischen Gehäuse 1 und Schulter 23 bilden.

Beim besprochenen Ausführungsbeispiel bilden der als Hallsensor 6 ausgebildete Meßwertaufnehmer und die Leiterplatte 5 einen integrierten Schaltkreis, wobei hier zur Lagefixierung der untere Rand des Stützteiles 8 und die Leiterplatte 5 zusammenwirken (Fig. 1).

Fig. 6 zeigt nun eine Ausführungsform der Erfindung, bei der der integrierte Schaltkreis als einstückiger Bauteil 24 ausgebildet ist. Auch hier handelt es sich um einen als Hallsensor ausgebildeten Meßwertaufnehmer und der Dauermagnet 10 ist hier auf der Oberseite des gegenüber dem unteren Rand 25 des Stützteiles 8 zurückversetzten Bodens 9 festgelegt, wobei dieser Dauermagnet 10 bei diesem Ausführungsbeispiel randseitig von außen umgriffen ist. Der untere Rand 25 des Stützteiles 8 liegt hier direkt an der Innenseite des Bodens 2 des Gehäuses 1 an. Dies ist für die Lagepositionierung des Stützteiles innerhalb des Gehäuses 1 vorgesehen. Im übrigen sind gleiche Teile mit gleichen Hinweisziffern ausgestattet, die auch im Zusammenhang mit der Schilderung des ersten Ausführungsbeispieles verwendet worden sind. Beide Ausführungsbeispiele zeigen und beschreiben Meßfühler mit Hallsensoren als Meßwertaufnehmer, zu deren Betrieb Magnete 10 für die Herstellung der magnetischen Vorspannung erforderlich sind. In der gezeigten und beschriebenen Bauart können auch Meßfühler gefertigt werden, die andere Meßwertaufnehmer besitzen. Als Meßwertaufnehmer eignen sich Binärsensoren und Analogsensoren. Unter Binärsensor wird ein Meßwertaufnehmer verstanden, der ein Aus-Ein-Signal abgibt, unter Analogsensor ein Temperaturfühler. Die gesamte Elektronik für den Betrieb eines solchen Meßwertaufnehmers ist unmittelbar im Gehäuse untergebracht und vorzugsweise am Stützteil 8 festgelegt. Durch die beanspruchte Bauweise werden die einzelnen Teile relativ zueinander sicher und verläßlich festgelegt, so daß sie beim nachträglichen Vergießen ihre vorgesehene Lage beibehalten. Durch die Festlegung der einzelnen Bauteile am Stützteil 8 ist das Montagehandling relativ einfach, da der Boden 9 des Stützteiles 8 von beiden Seiten her frei zugänglich ist. Ist der Stützteil 8 mit den daran festgelegten Bauteilen in das Gehäuse 1 eingesetzt, so sind die einzelnen Teile sicher relativ zueinander positioniert und sind auch in dieser Lage gehalten, wenn nachträglich die Vergußmasse in das Gehäuse einfließt.

### Legende zu den Hinweisziffern:

- 1: Gehäuse
- 2: Boden
- 3: Vertiefung
- 4: Schulter
- 5: Leiterplatte
- 6: Hallsensor
- 7: Vorsprung
- 8: Stützteil
- 9: Boden
- 10: Dauermagnet
- 11: Steckdorn
- 12: Wulst
- 13: Begrenzungsfläche
- 14: Begrenzungsfläche
- 15: Nut
- 16: Flansch
- 17: Zapfen
- 18: Aussparung
- 19: Öffnung
- 20: Vergußmasse
- 21: Tülle
- 22: Signalleitung
- 23: Schulter
- 24: einstückiger Bauteil
(integrierter Schaltkreis)
- 25: unterer Rand

## Patentansprüche

1. Meßfühler für Kraftfahrzeuge mit einem als Hallsensor (6) ausgebildeten Meßwertaufnehmer und einer elektronischen Schaltung, insbesondere einer integrierten Schaltung zur Aufbereitung, Verstärkung und/oder Verarbeitung der Signale des Meßwertaufnehmers, wobei der Meßwertaufnehmer zusammen mit der integrierten Schaltung am oder im Boden (2) eines topfartigen Gehäuses (1) angeordnet und durch einen in das Gehäuse (1) eingesetzten und mit seiner Außenwand an der Innenwand des Gehäuses (1) anliegenden Stützteil (8) lagemäßig fixiert ist, wobei der Meßwertaufnehmer und die integrierte Schaltung an der Unterseite des Stützteiles (8) festgelegt sind oder zwischen dem Boden (2) des topfartigen Gehäuses (1) und dem Boden (9) des Stützteiles (8) gehalten sind und der vom Gehäuse (1) und dem Stützteil (8) begrenzte Hohlraum von einer Vergußmasse (20) ausgefüllt ist und die Meßsignale über mindestens eine Signalleitung aus dem Gehäuse herausführbar sind, und wobei der Boden (9) des U- oder topfförmigen Stützteiles (8) gegenüber seinem unteren Rand (25) nach oben versetzt ist und der dadurch zwischen dem Boden (9) des Stützteiles (8) und dem Boden (2) des topfartigen Gehäuses (1) ausgesparte Hohlraum der Aufnahme des Meßwertaufnehmers und/oder der integrierten Schaltung dient und der Stützteil (8) nahe seinem oberen Rand einen außen liegenden Wulst (12) aufweist, der bei in das topfartige Gehäuse (1) eingesetztem Stützteil (8) in eine an der Innenwand des Gehäuses (1) ausgesparte Nut (15) formschlüssig eingreift.

2. Meßfühler nach Anspruch 1, bei dem der Stützteil (8) an seinem oberen Rand einen radial auskragenden Flansch (16) aufweist, der am Rand des topfartigen Gehäuses (1) aufliegt.

3. Meßfühler nach Anspruch 2, bei dem der Rand des topfartigen Gehäuses (1) zur Achse desselben parallel liegende Zapfen (17) aufweist, die in im Flansch (16) des Stützteiles (8) vorgesehene Aussparungen (18) formschlüssig eingreifen.

4. Meßfühler nach Anspruch 1, bei dem im Boden (9) des Stützteiles (8) Öffnungen (19) ausgespart sind.

5. Meßfühler nach Anspruch 1, bei dem die Vergußmasse (20) den Kopf des Meßfühlers und eine Tülle (21) für die in den bzw. aus dem Fühler führende Signalleitung (22) bildet.

6. Meßfühler nach Anspruch 5, bei dem der aus der Vergußmasse (20) gebildete Kopf des Meßfühlers eine gegenüber dessen Gehäuse (1) radial ausladende Schulter (23) aufweist.

7. Meßfühler nach Anspruch 1, bei dem der untere, gegenüber dem zurückversetzten Boden (9) vorspringende Rand (25) des Stützteiles (8) an der Innenseite des Bodens (2) des topfartigen Gehäuses (1) anliegt bzw. aufsteht.

8. Meßfühler nach einem der Ansprüche 1 bis 7, bei dem der Hallsensor (6) an der Unterseite einer die elektronische Schaltung bzw. die integrierte Schaltung aufweisenden Leiterplatte (5) angeordnet ist und der Boden (2) des topfartigen Gehäuses (1) eine der Aufnahme des Hallsensors (6) dienende Vertiefung (3) besitzt, an deren Schulter (4) die Leiterplatte (5) aufliegt und die Leiterplatte (5) durch den in das Gehäuse eingesetzten U- oder topfförmigen Stützteil (8) fixiert ist, der randseitig an der Leiterplatte (5) an- bzw. aufliegt und der gegenüber der Leiterplatte (5) zurückversetzte Boden des Stützteiles (8) einen Halter zur Festlegung eines der magnetischen Vorspannung des Hallsensors (6) dienenden Magneten (10) trägt.

9. Meßfühler nach Anspruch 8, bei dem der Halter zur Festlegung des Magneten (10) gegen die Leiterplatte (5) gerichtet ist.

10. Meßfühler nach Anspruch 9, bei dem der am gegenüber seinem unteren Rand (25) zurückversetzten Boden (9) des Stützteiles (8) vorgesehene Halter für den Magneten (10) als Steckdorn (11) ausgebildet ist und der Magnet (10) eine vorzugsweise mittige Bohrung zur Aufnahme des Steckdornes (11) besitzt und das freie Ende des Steckdornes (11) den Rand der Bohrung formschlüssig hintergreift.

## Claims

1. A measuring sensor for motor vehicles with a measured-value receiver designed as a Hall sensor (6) and an electronic circuit, in particular an integrated circuit for the preparation, intensification and/or processing of signals from the measured-value receiver, the measured-value receiver together with the integrated circuit being disposed on or in the base (2) of a barrel-type casing (1) and fixed in position by a supporting part (8) introduced into the casing (1) and with its external wall butting against the internal wall of the casing (1), the measured-value receiver and the integrated circuit being fastened on the lower face of the supporting part (8) or held between the base (2) of the barrel-type casing (1) and the base (9) of the supporting part (8), and the hollow delimited by the casing (1) and the supporting part (8) being packed with a sealing compound (20) and the measured signals being conductible out of the casing via at least one signal wire, and in which the base (9) of the U-shaped or barrel-shaped supporting part (8) is upwardly displaced relative to its lower edge (25) and the hollow thus left between the base (9) of the supporting part (8) and the base (2) of the barrel-type casing (1) serving to accommodate the measured-value receiver and/or the integrated circuit, and the supporting part (8) having, near its top edge, a bead (12) on the outside which in the case of a supporting part (8) introduced into the barrel-type housing (1) engages positively into a groove (15) in the internal wall of the casing (1).

2. A measuring sensor according to Claim 1, in which the supporting part (8) has on its upper edge a radially projecting flange (16) supported on the edge of the barrel-type casing (1).

3. A measuring sensor according to Claim 2, in which the edge of the barrel-type casing (1) has projections (17) lying parallel to the axis of the said casing (1), the said projections (17) engaging positively into recesses (18) provided in the flange (16) of the supporting part (8).

4. A measuring sensor according to Claim 1, in which gaps (19) are left in the base (9) of the supporting part (8).

5. A measuring sensor according to Claim 1, in which the sealing compound (20) forms the head of the measuring sensor and a socket (21) for the signal wire (22) leading into or out of the sensor.

6. A measuring sensor according to Claim 5, in which the head of the measuring sensor formed from the sealing compound (20) has a shoulder (23) projecting radially relative to the sensor casing (1).

7. A measuring sensor according to Claim 1, in which the lower edge (25) of the supporting part (8), which projects over the rearwardly displaced base (9), buts against or stands on the inner face of the base (2) of the barrel-type casing (1).

8. A measuring sensor according to one of Claims 1 to 7, in which the Hall sensor (6) is disposed on the lower face of a printed circuit board (5) bearing the electronic circuit or the integrated circuit and the base (2) of the barrel-type housing (1) has a depression (3) serving to accommodate the Hall sensor (6), on the shoulder (4) of which depression (3) the printed circuit board (5) is supported and the printed circuit board (5) is fixed by the U-shaped or barrel-shaped supporting part (8) introduced into the casing, the said supporting part butting against and lying on the printed circuit board (5) on its outer surface and the base of the supporting part (8) rearwardly displaced relative to the printed circuit board (5) has a holder for fastening a magnet (10) serving for magnetic biasing of the Hall sensor (6).

9. A measuring sensor according to Claim 8, in which the holder for holding the magnet (10) points towards the printed circuit board (5).

10. A measuring sensor according to Claim 9, in which the holder for the magnet (10) provided on the base (9) of the supporting part (8), the said base being rearwardly displaced relative to the lower edge (25) of the said holder is designed as a fastening pin (11) and the magnet (10) has a preferably central bore to accommodate the fastening pin (11) and the free end of the fastening pin (11) engages positively behind the edge of the bore.

## Revendications

1. Détecteur de mesures pour véhicules automobiles, dans lequel :
• il est prévu un récepteur des valeurs mesurées, sous la forme d'un détecteur à effet Hall (6), ainsi qu'un circuit électronique, en particulier un circuit intégré pour préparer, amplifier et/ou traiter les signaux du récepteur de mesures,
• le récepteur de mesures et le circuit intégré sont montés sur ou dans le fond (2) d'un boîtier (1) en forme de pot et sont fixés en position par une pièce d'appui (8) inséré dans le boîtier (1) avec sa paroi externe appliquée sur la paroi interne du boîtier (1),
• le récepteur de mesures et le circuit intégré sont soit fixés sur la face inférieure de la pièce d'appui (8), soit maintenus entre le fond (2) du boîtier (1) et le fond (9) de la pièce d'appui, le volume creux délimité par le boîtier (1) et la pièce d'appui (8) étant rempli par une masse coulée (20),
• les signaux de mesure peuvent être transférés à l'extérieur du boîtier par au moins un conducteur de signaux,
• le fond (9) de la pièce d'appui (8) en forme de U ou de pot est décalé vers le haut par rapport à son bord inférieur (25), et l'espace creux ménagé ainsi entre le fond (9) de la pièce d'appui (8) et le fond (2) du boîtier (1) réalisé en forme de pot, sert à loger le récepteur des valeurs mesurées et/ou le circuit intégré, tandis que la pièce d'appui (8), près de son bord supérieur, porte un bourrelet (12) situé à l'extérieur et qui, quand la pièce d'appui (8) est insérée dans le boîtier (1), est en prise avec combinaison de formes dans une rainure (15) creusée dans la paroi interne du boîtier (1) .

2. Détecteur selon la revendication 1,
dans lequel
la pièce d'appui (8) présente, le long de son bord supérieur, une bride (16) faisant saillie radialement et en appui sur le bord du boîtier (1) réalisé en forme de pot.

3. Détecteur selon la revendication 2,
dans lequel
le bord du boîtier (1) réalisé en forme de pot porte des ergots (17), parallèles à l'axe du pot qui sont en prise avec verrouillage par combinaison de formes, dans des évidements (18) prévus dans la bride (16) de la pièce d'appui (8).

4. Détecteur selon la revendication 1,
dans lequel
le fond (9) de la pièce d'appui (8) est percé d'ouvertures (19).

5. Détecteur selon la revendication 1,
dans lequel
la masse coulée (20) constitue la tête du détecteur de mesures et également une douille (21) de passage du conducteur de signaux venant ou aboutissant au détecteur.

6. Détecteur selon la revendication 5,
dans lequel
la tête du détecteur constituée par la masse coulée (20) présente un épaulement (23) débordant radialement par rapport au boîtier (1) du détecteur.

7. Détecteur selon la revendication 1,
dans lequel
le bord inférieur (25) de la pièce d'appui (8), faisant saillie vers le bas vis-à-vis du fond reculé (9) de la pièce, est en contact avec la face interne du fond (2) du boîtier (1) réalisé en forme de pot ou situé au-dessus.

8. Détecteur selon une des revendications 1 à 7,
dans lequel
le détecteur à effet Hall (6) est monté sur la face inférieure d'une plaque (5) conductrice portant le circuit électronique ou le circuit intégré et le fond (2) du boîtier (1) réalisé en forme de pot présente une cavité (3) servant de logement au détecteur (6) sur l'épaulement (4) duquel repose la plaque (5) qui est fixée par la pièce d'appui (8) en forme de U ou réalisé en forme de pot s'approchant ou s'écartant en appui par son bord sur la plaque (5) et le fond de la pièce d'appui (8) remis à l'état antérieur vis-à-vis de la plaque 5, présente un support pour fixer un aimant (10) servant à la polarisation magnétique du détecteur à effet Hall (6).

9. Détecteur selon la revendication 8,
dans lequel
le support de fixation de l'aimant (10) est dirigé vers la plaque (5).

10. Détecteur selon la revendication 9,
dans lequel
le support prévu pour l'aimant (10) sur le fond (9) de la pièce d'appui (8) remis à l'état antérieur vis-à-vis de son bord inférieur, a la forme d'une broche à fiche (11) et l'aimant (10) est pourvu de préférence d'un alésage central pour recevoir la broche à fiche (11), l'extrémité libre de la broche à fiche (11) étant en prise, par combinaison de formes, sur le bord de l'alésage.
